(19) Europäisches Patentamt
European Patent Office
Office européen des brevets

(11) **EP 2 396 202 B1**

(12) **EUROPÄISCHE PATENTSCHRIFT**

(45) Veröffentlichungstag und Bekanntmachung des Hinweises auf die Patenterteilung:
**29.04.2015   Patentblatt 2015/18**

(21) Anmeldenummer: **10702259.2**

(22) Anmeldetag: **13.02.2010**

(51) Int Cl.:
**B60T 8/32** (2006.01)     **B60T 13/74** (2006.01)

(86) Internationale Anmeldenummer:
**PCT/EP2010/000904**

(87) Internationale Veröffentlichungsnummer:
**WO 2010/091883 (19.08.2010 Gazette 2010/33)**

(54) **BREMSSYSTEM MIT SIMULTANEM BZW. TEILSIMULTANEM DRUCKAUF- UND DRUCKABBAU IN DEN RADBREMSEN AUS UNTERSCHIEDLICHEN RADZYLINDERDRUCKNIVEAUS**

BRAKING SYSTEM WITH SIMULTANEOUS OR PARTIALLY SIMULTANEOUS BRAKE CYLINDER PRESSURE INCREASE OR DECREASE FROM DIFFERENT BRAKE CYLINDER PRESSURE LEVELS

SYSTEME DE FREINAGE AVEC DIMINUTION OU AUGMENTATION  DE PRESSION DANS LES CYLINDRES DE FREIN SIMULTANEE OU PARTIELLEMENT SIMULTANEE A PARTIR DE NIVEAUX DIFFERENTS DE LA PRESSION DANS LES CYLINDRES DE FREIN

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.02.2009   DE 102009008944**

(43) Veröffentlichungstag der Anmeldung:
**21.12.2011   Patentblatt 2011/51**

(73) Patentinhaber: **IPGATE AG**
**8808 Pfäffikon SZ (CH)**

(72) Erfinder:
• **LEIBER, Heinz**
**71739 Oberriexingen (DE)**

• **VAN ZANTEN, Anton**
**71254 Ditzingen (DE)**
• **KÖGLSPERGER, Christian**
**82538 Geretsried (DE)**

(74) Vertreter: **Lenzing Gerber Stute**
**Partnerschaft von Patentanwälten mbB**
**Bahnstraße 9**
**40212 Düsseldorf (DE)**

(56) Entgegenhaltungen:
WO-A1-94/23976        WO-A1-03/082645
WO-A1-2006/111393     DE-A1- 3 632 836
DE-A1- 3 809 099

EP 2 396 202 B1

## Beschreibung

Die vorliegende Erfindung betrifft ein Bremssystem nach dem Oberbegriff des Anspruchs 1.

## Stand der Technik

Bei ABS / ESP bestimmt die Genauigkeit und die Dynamik des Druckverlaufes die Regelgüte und damit den Bremsweg und die Stabilität des Fahrzeugs. Entscheidend für eine gute Regelung ist eine schnelle und feine Druckregelung. Bis auf die elektromechanische Bremse EMB arbeiten alle hydraulischen Systeme mit 2/2-Wege-Magnetventilen. Hierzu liefert das Bremsenhandbuch 2. Auflage v. 2004, ISBN 3-528-13952-8, S.114-119, mit Literaturangaben die detaillierte Basisinformation. Ohne besondere Maßnahmen haben diese Ventile ein rein digitales Schaltverhalten, d.h. sie sind entweder offen oder geschlossen (auf/zu). Durch das schnelle Schließen entstehen abhängig vom Druckgradienten Druckschwingungen mit großer Amplitude, die sich auf das Radverhalten auswirken und vor allem Geräusche verursachen. Der Druckgradient hängt dabei vom Differenzdruck ab, der im Regelbereich zwischen $\mu = 0{,}05$ (Eis) und $\mu = 1{,}0$ (Asphalt trocken) stark schwankt und außerdem vom stark schwankendem THZ-Druck des Bremskraftverstärkers abhängt. Die Dosierbarkeit der oft getakteten Druckaufbauamplitude im Bereich vom 1-10 bar (Sollwert) gelingt nur relativ ungenau. Eine Verbesserung kann durch eine aufwändige PWM-Steuerung der 2/2-Magnetventile erzielt werden. Damit lässt sich insbesondere der Übergang vom Druckaufbau zum Druckhalten beeinflussen, so dass die Druckschwingungen und das Geräusch kleiner werden. Diese PWM-Steuerung ist schwierig und relativ ungenau, weil sie den Druckgradienten, die Druckamplitude und auch die Temperatur berücksichtigen muss. Für den Druckabbau wird diese PWM-Steuerung nicht eingesetzt.

In der WO2006/111393A1 ist ein Verfahren zur Drucksteuerung mittels Elektromotor und Kolbensteuerung beschrieben. Hierbei bestimmt die HZ-Kolbenbewegung des Bremskraftverstärkers die Drucksteuerung und weist damit erhebliche Vorteile hinsichtlich genauer Drucksteuerung und variabler Gradienten auf. Die WO2006/111393A1 beschreibt zudem die Druckregelung mehrerer Radbremsen durch das sogenannte Multiplexverfahren (MUX-Verfahren). So wird u.a. beschrieben, dass die 2/2-Wege-Magnetventile einen großen Strömungsquerschnitt mit vernachlässigbarer Drosselwirkung aufweisen sollten und die Leitungen vom Kolben-Zylinder-System zum Bremszylinder einen vernachlässigbaren Strömungswiderstand aufweisen sollten. Weiterhin wird ausgeführt, dass der Druckabbau an zwei Radbremsen gleichzeitig erfolgen kann, wenn anfänglich ungefähr das gleiche Druckniveau vorherrscht.

Trotz dieser in der WO2006/111393A1 beschriebenen Maßnahmen hat das Multiplexverfahren den Nachteil, dass bei ungleichem Druckniveau in zwei Radbremsen ein simultaner Druckabbau nicht möglich ist, da hier bei der in der WO2006/111393A1 beschriebenen Dimensionierung beim Druckabbau ein Druckausgleich zwischen zwei bis vier Radbremsen erfolgen kann, sofern der Strömungswiderstand vom HZ bzw. THZ zum Radzylinder zu gering ist. Hinzu kommt, dass zwei oder mehrere Druckabbauforderungen, die leicht zeitlich versetzt zueinander auftreten, aufgrund oben genannter Problematik des möglichen Druckausgleiches zwischen den Radzylindern ebenfalls nicht simultan oder teilsimultan durchgeführt werden können. Dies ist insbesondere deshalb problematisch, da besonders der zeitliche Versatz von Druckanforderungen gleichen Vorzeichens durchaus vermehrt auftreten kann.

Wie oben erwähnt können Druckab- und Druckaufbauten simultan oder teilsimultan erfolgen. Von simultan wird gesprochen, wenn zwei oder mehrere Magnetventile gleichzeitig geöffnet und gleichzeitig geschlossen werden. Teilsimultan wird die Druckstellung dann bezeichnet, wenn zwei oder mehrere Magnetventile entweder zeitversetzt geöffnet oder zeitversetzt geschlossen werden.

Ferner ist in der WO2006/111393A1 kein simultaner Druckaufbau vorgesehen. Dies hat zur Folge, dass eine mögliche Druckerhöhung kurzfristig nicht durchgeführt werden kann, was möglicherweise einen längeren Bremsweg zur Folge hat.

## Aufgabe der Erfindung

Aufgabe der Erfindung ist das aus der WO2006/111393A1 bekannte Multiplexverfahren so weiter zu verbessern, dass ein simultaner oder teilsimultaner Druckabbau und Druckaufbau von zwei oder mehreren Radzylindern aus unterschiedlichen Druckniveaus erfolgen kann.

## Lösung der Aufgabe

Die Lösung wird erfindungsgemäß mit einem Bremssystem mit den Merkmalen des Anspruchs 1 gelöst. Weitere vorteilhafte Ausgestaltungen des Bremssystems nach Patentanspruch 1 ergeben sich durch die Merkmale der Unteransprüche.

Die Erfindung zeichnet sich vorteilhaft dadurch aus, dass ein simultaner oder teilsimultaner Druckabbau und Druckaufbau auch bei unterschiedlichen Druckniveaus aller Radbremsen möglich ist. Dies wird erreicht durch entsprechend hohe Kolbengeschwindigkeiten, die Dimensionierung der Strömungswiderstände RL der Leitung vom 2/2-Wege-Magnetventil zum Arbeitsraum des Kolben-Zylindersystems (HZ bzw. THZ) und des Strömungswiderstandes RV des 2/2-Magnetventils und der hydraulischen Leitungen zum Radzylinder. Als Bedingung gilt, dass der Strömungswiderstand RL kleiner als der Strömungswiderstand RV sein muss. Besonders vorteilhaft ist es, wenn der Strömungswiderstand RL um den Faktor 1,5 bis 3 kleiner als der Strömungswiderstand RV ist. Es ist besonders vorteilhaft, wenn zusätzlich der Strömungswiderstand RVR der hydraulischen Leitung vom Magnetventil zum Radzylinder mit berücksichtigt wird, wobei dieser vorteilhaft erheblich kleiner als der Strömungswiderstand RV des Magnetventils gewählt wird.

Gemäß der Erfindung wird berücksichtigt, dass der gesamte Strömungswiderstand (RL + RV) so ausgelegt wird, dass bei maximaler HZ-Kolbendynamik, welche der maximalen Motordynamik des Antriebs des Bremskraftverstärkers entspricht, und bei zwei oder mehr offenen Magnetventilen aufgrund der gleichzeitigen Volumenaufnahme oder Volumenabgabe der Radzylinderbremsen kurzfristig (d.h. innerhalb der Ventilöffnungszeiten) kein Druckausgleich stattfinden kann.

Bei der Auslegung der Schaltventile ist somit darauf zu achten, dass man einen sehr geringen Strömungswiderstand erreicht, der das oben beschriebene Minimum nicht unterschreitet. Es ist darauf zu achten, dass beim simultanen Druckabbau genügend Druckdifferenz zwischen HZ bzw. THZ und Radzylinder vorhanden ist, so dass beim gemeinsamen Druckabbau kein Druckausgleich zwischen den einzelnen Radzylindern der Radbremsen stattfinden kann.

Eine weitere Möglichkeit den Druckausgleich bei simultanem Druckabbau oder Druckaufbau zu verhindern besteht darin, den Strömungsquerschnitt der Ventile über eine PWM-Ansteuerung zu verringern und damit den Strömungswiderstand zu erhöhen. Vorteilhaft ist dabei, dass damit auch bei simultanen bzw. teilsimultanen Druckauf- und Druckabbauten situationsabhängig die Druckgradienten gewählt werden können und eine Bindung an die durch die Auslegung von RL und RV und gegebenenfalls RVR vorgegebenen Druckverläufe nicht besteht. Auch simultane bzw. teilsimultane Druckab- bzw. Druckaufbauten mit extrem unterschiedlichen Druckniveaus in zwei oder mehreren Rädern werden dadurch beherrschbar.

Da beim Druckabbau die maximal mögliche Strömungsgeschwindigkeit hin zu niedrigen Drücken abfällt und die Druck-Volumen-Kennlinien der einzelnen Räder eine nichtlineare Funktion darstellen, ist beim simultanen bzw. teilsimultanen Druckabbau und Druckaufbau eine variable bzw. unterschiedliche Kolbengeschwindigkeit unbedingt notwendig.

Bei simultanem bzw. teilsimultanem Druckabbau muss infolge des Volumenstroms vom Radzylinder in den HZ bzw. THZ dessen Kolben durch entsprechende Steuerung bzw. Regelung nachgestellt werden, um die Druckdifferenz aufrecht zu erhalten. Das Volumen, das dabei aus dem HZ bzw. THZ in den Radzylinder entströmt, würde ohne Nachstellung des HZ-Kolbens zu einer Druckerhöhung führen und statisch zu einem Druckausgleich. Diese Kolbennachstellung erfolgt primär über den Regler, welcher die notwendige Druckdifferenz errechnet, entsprechend die Volumenaufnahme im HZ bestimmt und dazu den HZ-Druck und vorteilhaft ein Druckmodell verwendet. Bei der Nachstellung des HZ- bzw. THZ-Kolbens ist darauf zu achten, dass der HZ- bzw.

THZ-Druck stets unterhalb des minimalen Druckniveaus aller in dem Augenblick mit dem HZ bzw. THZ über ein geöffnetes Magnetventil bzw. Schaltventil verbundenen Radzylindern liegt. Ähnliches gilt für den simultanen bzw. teilsimultanen Druckaufbau. Hier gibt der Regler wiederum das Druckniveau der Druckerhöhung an. Der HZ- bzw. THZ-Druck wird entsprechend über den Kolbenweg und die Kolbengeschwindigkeit nachgeregelt, um das Volumen der Radzylinder der Radbremsen für den Druckaufbau zu berücksichtigen. Bei der Nachstellung des HZ-Kolbens ist darauf zu achten, dass der HZ- bzw. THZ-Druck stets oberhalb des maximalen Druckniveaus aller in dem Augenblick mit dem HZ bzw. THZ über ein geöffnetes Magnetventil verbundenen Radzylindern liegt.

Sowohl für den simultanen, teilsimultanen bzw. nicht simultanen Druckaufbau, als auch für den simultanen bzw. teilsimultanen Druckabbau ist die Kenntnis der Druck-Volumen-Kennlinie der einzelnen Räder von großer Bedeutung. Diese wird in Abständen bei Fahrzeugstillstand für jedes Rad aufgenommen, indem das Volumen bei Kenntnis des HZ-Druckes bzw. THZ-Druckes über den entsprechenden Kolbenweg erfasst wird. Der Vorgang erfolgt mit einer relativ geringen Dynamik, so dass der Radzylinderdruck dem Druck im HZ bzw. THZ entspricht.

Bekanntlich ist bei hochdynamischen Vorgängen in der Drucksteuerung sowohl im Druckaufbau als auch im Druckabbau infolge der Strömungswiderstände im Schaltventil, welches in der Regel ein Magnetventil ist, und in den hydraulischen Leitungen zum Radzylinder ein großer Druckunterschied. Der Regler bestimmt jeweils die Druckänderung an der Radbremse, welche proportional zum Bremsmoment ist. Daher können konventionelle ABS/ESP-Systeme auch mit Druckgeber am Ausgang des Magnetventils nur statisch den Raddruck messen. Zur dynamischen Messung wird ein Druckmodell verwendet, dessen Genauigkeit begrenzt ist. Außerdem ist es aufwändig, für jedes Rad einen Druckgeber einzubauen. Bei dem erfindungsgemäßen System mit Kolbensteuerung kann jedoch bei Kenntnis der Druck-Volumen-Kennlinie der Radzylinderdruck auch bei unterschiedlicher Dynamik genau eingestellt werden.

Bei simultan, teilsimultan bzw. nicht simultan erfolgendem Druckaufbau und Druckabbau werden zwei oder mehrere Radzylinder gleichzeitig bedient. Die vom Regler vorbestimmte Druckdifferenz wird über die Druck-Volumen-Kennlinien der Räder in einen entsprechenden Kolbenweg umgerechnet. Mit Hilfe eines zusätzlichen Druckmodells wird der Radzylinderdruck ständig mitgerechnet. Sobald der Zieldruck für ein Rad erreicht ist, wird das jeweilige Magnetventil geschlossen. Der Kolben des HZ bzw. THZ fährt dann weiter, um die restlichen Radzylinder zu bedienen. Beim letzten zu regelnden Radzylinder wird die Drucksteuerung über den Kolbenweg, der zuvor aus der Druck-Volumen-Kennlinie berechnet wurde, vorgenommen. Danach kann auch das Magnetventil der letzten Radbremse geschlossen werden.

Das Druckmodell zur Kolbensteuerung ist für das erfindungsgemäße Bremssystem im Zusammenhang mit dem simultanen und auch nicht simultanen Druckabbau und Druckaufbau sehr wichtig, da es der Berechnung bzw. Schätzung der Radzylinderdrücke dient. Die damit berechneten Radzylinderdrücke werden sowohl zur Berechnung von Schließ- und Öffnungszeitpunkten der 2/2-Magnetventile (Schaltventile) wie auch als Istwert der Regelgröße des Druckreglers im Multiplexverfahren verwendet. Zusätzlich finden die Radzylinderdrücke aus dem Druckmodell Verwendung in übergeordneten Reglerstrukturen (z.B. ABS / ESP, Fahrerassistenzfunktionen wie ACC, usw.).

Da es vorteilhaft ist, dass der HZ bzw. THZ-Druck vor der Druckänderung im Radzylinder zunächst in die Nähe des Ausgangsdruckes des zu regelnden Radzylinders gebracht wird, ist es erforderlich, dass die Radzylinderdrücke fortlaufend berechnet und gespeichert werden. Diese Aufgabe wird ebenfalls vom Druckmodell übernommen.

Für die Regeldynamik, das dabei entstehende Geräusch und die Regelgenauigkeit besonders im Zusammenhang mit dem simultanen oder teilsimultanen Druckabbau und Druckaufbau ist das Druckmodell damit extrem wichtig.

Als Eingangssignal nutzt des Druckmodell den HZ- bzw. THZ-Druck. Über das Druckmodell werden daraus dann die verschiedenen Radzylinderdrücke berechnet. Die Modellparameter, wie z.B. Ersatzströmungswiderstand, Ersatzleitungsinduktivität und Druck-Volumen-Kennlinie können dabei über die Temperatur (z. B. Umgebungstemperatur oder separater Temperatursensor an einem Magnetventil) adaptiert werden. Sollten Veränderungen im Übergangsverhalten auftreten, ist es über eine Adaption ebenfalls möglich, die Parameter des Modells anzupassen.

Der Vorgang der simultanen bzw. teilsimultanen Druckänderung ist bei einer normalen ABS/ESP-Bremsung relativ selten und tritt eher bei Grenzfällen wie asymmetrische oder inhomogene Fahrbahn auf. Daher ist von großer Bedeutung, dass der Multiplexer möglichst schnell von einem Radzylinder zum nächsten umschalten kann. Dies ist möglich, da die Kolbengeschwindigkeit und damit die Druckänderungsgeschwindigkeit variabel einstellbar ist und dadurch in Extremfällen der Kolben mit maximaler Dynamik angesteuert werden kann. Durch die Variabilität ist es im Normalfall möglich, die Kolbengeschwindigkeit zu reduzieren und nur in Extremfällen auf die maximale Dynamik zurückzugreifen. Weiterhin ist die Umschaltzeit zwischen Beginn der Kolbenbewegung und Öffnen bzw. Schließen des Magnetventils wiederum abhängig von der zu steuernden Druckdifferenz und dem Absolutdruck im Radzylinder.

Bei der Auslegung des HZ bzw. THZ ist darauf zu achten, dass der HZ bzw. THZ bei geschlossenen Magnetventilen bzw. Schaltventilen ein möglichst steifes Gebilde darstellt, da die Elastizität bzw. Steifheit des HZ bzw. THZ einen signifikanten Einfluss auf die Umschaltzeit hat. Ein möglichst steifer HZ bzw. THZ mit dem zugeordneten Flüssigkeitsvolumen und auch der Verbindungskanäle, z. B. RL, ermöglicht somit sehr kurze Umschaltzeiten.

Zur Überprüfung und ggf. Korrektur der durch das Druckmodell berechneten Radzylinderdrücke während eines längeren Regeleingriffs erfolgt in größeren Zeitabständen ein Vergleich des Radzylinderdruckes mit dem HZ- bzw. THZ-Druck. Bei stillstehendem Kolben und offenem Magnetventil wird daher nach einer gewissen Druckeinschwingzeit ein statischer Abgleich durchgeführt, der aufgrund des Aufbaus des Druckmodells ohne zusätzliche Adaptionsregeln oder Erweiterungen im Druckmodell automatisch abläuft. Die Überprüfung kann auch erfolgen, wenn der vom Regler vorgegebene Schlupf oder die Radbeschleunigung nicht erreicht wird. Es ist auch möglich, ohne simultane bzw. teilsimultane Druckänderung nur auf Basis der Druck-Volumen-Kennlinie und entsprechender Kolbenverstellung proportional zur Regleranforderung zu arbeiten.

In der WO 2006/111393 A1 ist ein Bremssystem beschrieben, bei dem ein Wegsimulator zum Einsatz kommt. Das erfindungsgemäße Bremssystem kann einen Wegsimulator aufweisen. Aus Kostengründen kann jedoch auch auf einen Wegsimulator verzichtet werden. In diesem Fall kann über den elektrischen Antrieb und eine mechanische Verbindung zwischen Bremspedal und Bremskraftverstärker eine Rückwirkung auf das Bremspedal erfolgen. Das beschriebene Bremssystem kann auch als volles Brake-by-wire-System ohne mechanische Verbindung zum Bremspedal eingesetzt werden. Auch ist denkbar, dass parallel zum Bremssystem ein THZ ähnlich der EHB eingesetzt wird, welcher bei Ausfall des beschriebenen Bremssystems entsprechenden Druck über zusätzliche Umschaltventile liefert.

Nachfolgend wird die Erfindung anhand von Zeichnungen näher erläutert.

Es zeigen:

Fig. 1: Grundaufbau der Aktuatorik zur Drucksteuerung;

Fig. 2: Regelzyklus zur Drucksteuerung von einem Radzylinder;

Fig. 3: Regelzyklus zur teilsimultanen Drucksteuerung von zwei Radzylindern;

Fig. 4: Blockschaltbild eines Druckmodells;

Fig. 5: Signalflussplan einer möglichen Softwarestruktur.

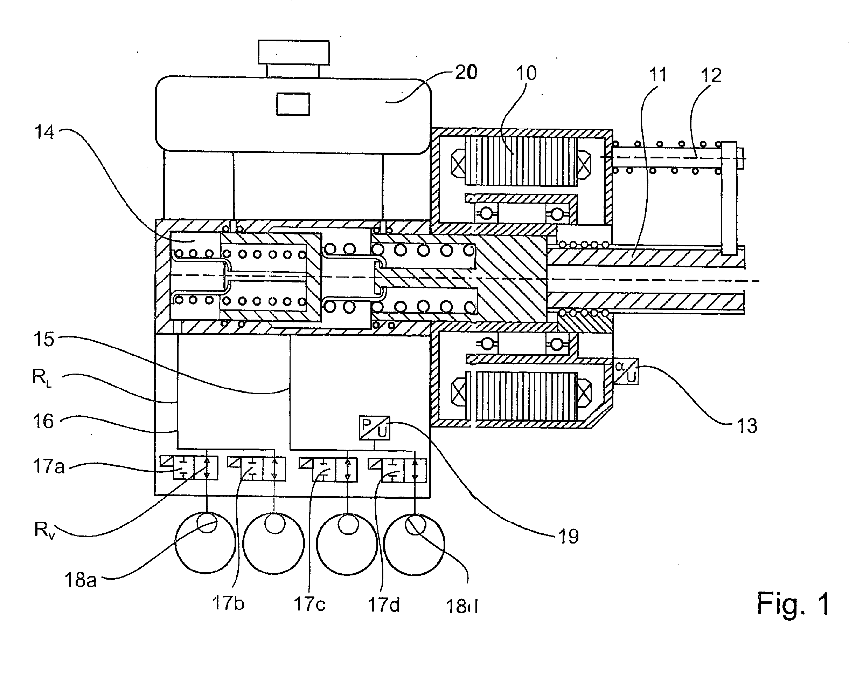

Die Figur 1 zeigt den grundsätzlichen Aufbau des erfindungsgemäßen Bremssystems bestehend aus HZ bzw. THZ 14, EC-Motor 10, Spindel 11 zum Antrieb des Druckstangenkolbens, Spindelrückstellung 12 und Drehwinkelgeber 13 zur Positionsbestimmung des Kolbens und der Erfassung der Rotorposition bzw. des Kolbenweges.

Erhält der Kolben den Stellbefehl zum Aufbau eines bestimmten Druckes, so erfolgt über die vorher aufgenommene und in einem Kennfeld gespeicherte Druck-Volumen-Kennlinie die entsprechende Kolbenbewegung über Positionsgeber 13 und Druckgeber 19 im Druckstangenkreis. Bei anschließendem kurzem konstantem Druck, was meistens bei einer Bremsung der Fall ist, erfolgt der Korrelationsvergleich aufgrund neuer Messdaten mit den abgelegten Kennfelddaten. Bei einer Abweichung wird bei späterem Fahrzeugstillstand nochmals einzeln die Druck-Volumen-Kennlinie für jede Radbremse aufgenommen und das Kennfeld korrigiert. Ist die Abweichung nennenswert, z. B. an einem Radzylinder, so erfolgt der Hinweis, die Werkstatt aufzusuchen.

Der im HZ bzw. THZ erzeugte Druck gelangt über die Leitungen 15, 16 vom Druckstangenkolben und Schwimmkolben über die 2/2-Magnetventile 17a-d zu den Radzylindern 18a und 18d. Anstelle von Druckstangen und Schwimmkolben kann auch eine andere Kolbenanordnung oder Kopplung durch Federn eingesetzt werden. Der Druckstangenkolben ist vorteilhaft fest mit der Spindel verbunden, so dass der Druckstangenkolben vom Antrieb auch zum schnellen Druckabbau zurück bewegt werden kann.

Hierbei ist die Dimensionierung der Strömungswiderstände RL vom HZ zum Magnetventil 17i (mit i= a,b,c,d) in den Leitungen 15 und 16 und anschließend der Strömungswiderstände RV im Magnetventil und hydraulischen Verbindung zum Radzylinder von großer Bedeutung. Beide Widerstände RL und RV sollten niedrig sein, wobei gelten sollte RL sehr viel kleiner als RV und der Strömungswiderstand vom Magnetventil zum Radzylinder RVR im Vergleich zum Magnetventil klein ist, vorzugsweise

$$RL \leq RV/\text{Faktor},$$

wobei der Faktor 1,5 bis 5, insbesondere 1,5 bis 3, bei Raumtemperatur betragen sollte. Die 2/2-Magnetventile 17a-d mit den Leitungen 15 und 16 sowie Druckgeber 19 sind vorzugsweise in einem Block integriert, hierfür kann auch der HZ bzw. THZ mit einbezogen werden.

Erfolgt der Stellbefehl zur Druckreduzierung, so erfolgt wiederum die Druckeinstellung über den Kolbenweg und anschließend der Abgleich mit der Druckmessung. Druckaufbau und -abbau entsprechen der üblichen BKV-Funktion. Hierzu ist eine Ergänzung mit den Komponenten, z. B. Pedal, Pedalweggeber, Wegsimulator u. a. notwendig, wie diese in der vorgenannten WO2006/111393A1 beschrieben sind. Das Bremssystem der WO2006/111393A1 hat jedoch die Drucksteuerung und -modulation zum Inhalt und benötigt nicht alle oben genannten Komponenten.

Erfolgt nun eine Druckmodulation, z.B. für die ABS/ESP-Funktion, so wird die MUX-Funktion eingeschaltet. Soll z.B. am Rad 18a der Druck reduziert werden, nachdem zuvor der HZ bzw. THZ 14 über einen Motor 10 einen bestimmten Druck in den Leitungen 15 und 16 und Radzylinder 18b und 18d erzeugt hat, so werden die Magnetventile 17b bis 17d geschlossen.

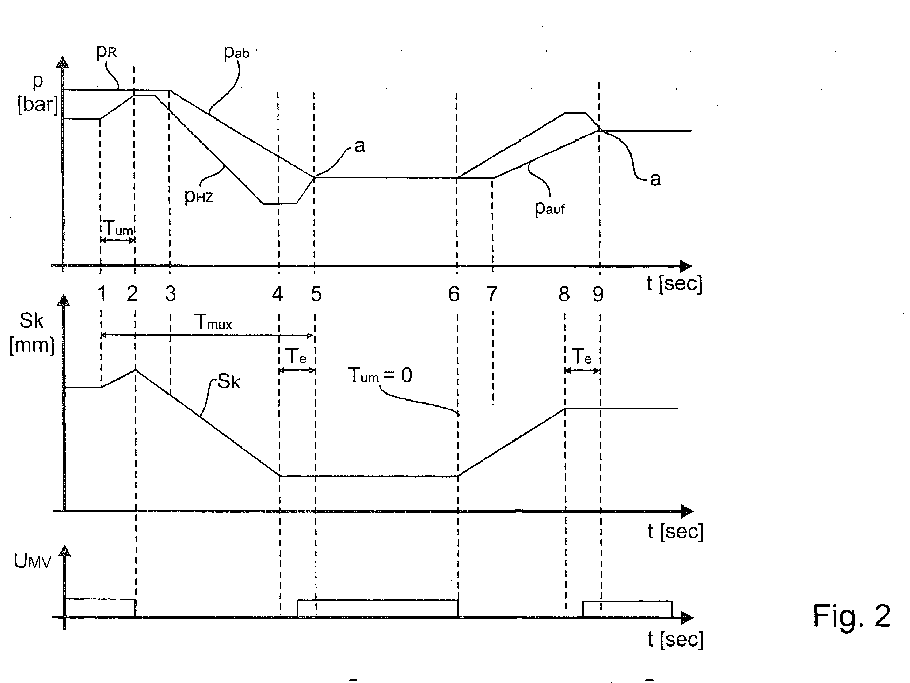

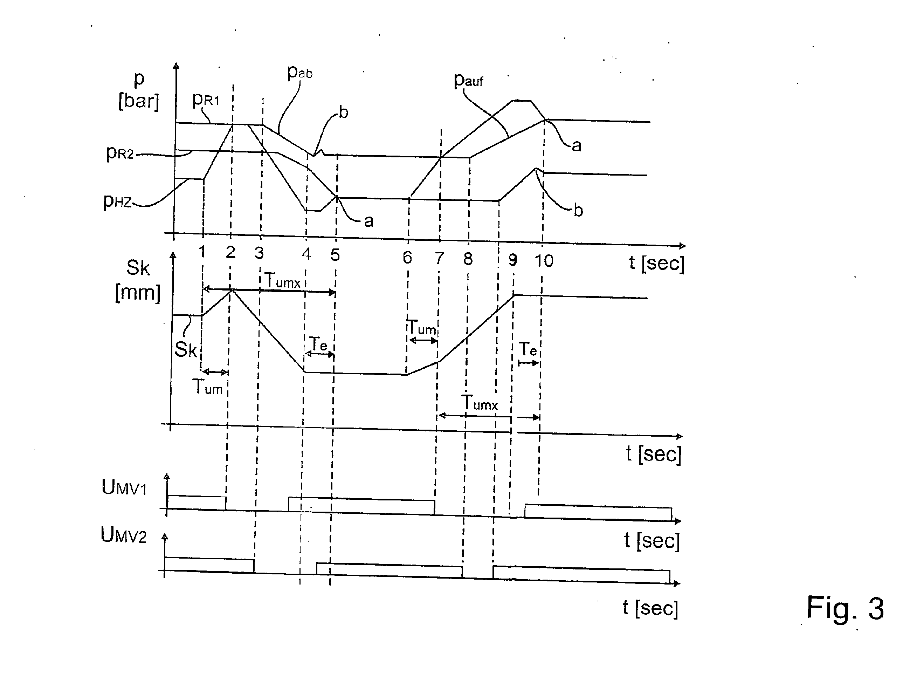

Ist über entsprechenden Kolbenweg der vom Regler vorgegebene Druckabbau $p_{ab}$ erreicht, so wird das Magnetventil 17a geschlossen, und der Kolben des HZ bzw. THZ fährt in die vom Regler vorgegebene Sollposition. Soll danach z. B. im Radzylinder 18d ein Druckaufbau $p_{auf}$ erfolgen, so öffnet das Magnetventil 17d, und der Kolben wird in die neue Sollposition für den Sollwert $p_{auf}$ gefahren. Sofern ein simultaner bzw. teilsimultaner Druckabbau $p_{ab}$ in den Radzylindern 18a und 18d erfolgen soll, so werden die Magnetventile 17a und 17d stromlos und damit in die geöffnete Stellung geschaltet und die Magnetventile 17b und 17c geschlossen. Auch hier verfährt der Kolben in die neue Sollposition. Diese Vorgänge für die Druckmodulation erfolgen extrem schnell mit speziellen Schaltbedingungen für Motor und Magnetventile. Diese sind in der Figur 2 und der Figur 3 beschrieben.

In Fig. 2 ist ein Regelzyklus im MUX-Verfahren für eine Radbremse dargestellt. Im oberen x-y-Diagramm ist mit $p_R$ der Radzylinderdruck und mit $p_{HZ}$ der HZ- bzw. THZ-Druck schematisch dargestellt. Darunter ist mit der y-Achsenbeschriftung $s_K$ die Position des Druckstangenkolbens über die Zeit aufgetragen. Die Ansteuersignale $U_{MV}$ für die Magnetventile sind im unteren Diagramm dargestellt.

Bei dem dargestellten zeitlichen Verlauf erfolgt zuerst ein Druckabbau $p_{ab}$. Zum Zeitpunkt 6 schließt sich ein Druckaufbau $p_{auf}$ für eine Radbremse an.

Vor dem Zeitpunkt 1 sind alle Schaltventile 17a-d geschlossen und der HZ-Kolben steht still. Bei 1 erfolgt ein Druckabbaubefehl für das dargestellte Rad. Zwischen den Zeitpunkten 1 und 2 ist die sogenannte Umschaltzeit $T_{Um}$ dargestellt, in der, unter Verwendung der Druck-Volumen-Kennlinie des Hauptzylinders, mit einer Kolbenverschiebung versucht wird, den Druck im HZ dem über das Druckmodell bekannten Raddruck anzupassen, damit beim Ventilöffnen zum Ende der Phase 2 bereits annähernd ein Druck im HZ eingestellt ist, der dem Druck im Radzylinder entspricht, so dass nahezu ein Druckausgleich zwischen dem HZ und dem Radzylinder erreicht ist. Über die Druck-Volumen-Kennlinie des Radzylinders wird nun abhängig vom aktuellen Raddruck und vom geforderten Solldruck am Rad bei 2 das notwendige Volumen bzw. der Kolbenweg und speziell der Differenzweg berechnet, dass/der dem Radzylinder entnommen werden muss, um den Druck auf ein bestimmtes bzw. das geforderte Niveau zu bringen. Der HZ-Kolben wird nun entsprechend angetrieben/geregelt und verstellt und das jeweilige Schaltventil 17i wird gleichzeitig angesteuert und geöffnet. Der Zeitbereich zwischen den Zeitpunkten 2 und 3 stellt die gesamte kleine Totzeit oder Verzögerungszeit dar, bis auch im Raddruck ein Effekt des Druckabbaus erkennbar ist. Anschließend fährt der HZ-Kolben zwischen 3 und 4 die berechnete Sollposition an, die er am Ende der Phase 4 erreicht hat. Sollte sich in der Zwischenzeit der Solldruck wieder erhöhen, z.B. durch Vorgabe von übergeordneten Reglern, so würde der Motor den Vorgang schon früher abbrechen. Ist die Sollposition erreicht, so wird zur Beruhigung der Strömungsverhältnisse in der Hydraulik eine Einschwingzeit $T_e$ in der Phase 4 bis 5 eingehalten in der der HZ-Kolben still steht, bevor das Schaltventil 17i schließt. Hier wird mit einer Voransteuerung der Schaltventile gearbeitet, wobei das Signal um die Schließzeit des Ventils vorgezogen wird. Die Einschwingzeit 4-5 trägt zur genaueren Schätzung der Raddrücke bei, und reduziert das Geräusch beim Schließen des Magnetventils zum Zeitpunkt a. Die Ansteuerung des Magnetventils zum Schließen erfolgt unter Berücksichtigung des aktuell vorliegenden Istdruckes, des Druckgradienten und der vorbekannten Schließzeit. In der Phase 5 bis 6 sind nun wieder alle Schaltventile 17a-d geschlossen. Der Aktuator hätte nun Zeit, weitere Räder zu bedienen. Muss er in der Zwischenzeit den Druck im HZ nicht verändern, so ist bei einem dann folgenden Druckaufbauwunsch zum Zeitpunkt 6 die Umschaltzeit $T_{UM} = 0$. Der folgende Druckaufbau erfolgt analog wie der zuvor beschriebene Druckabbau.

Die Figur 3 unterscheidet sich von der Fig. 2 dadurch, dass zusätzlich im obersten Diagramm ein zweiter Radzylinderdruck $p_{R2}$ dargestellt und ganz unten ein weiteres Diagramm für das Ansteuersignal des zweiten Schaltventils hinzugefügt ist.

Grundsätzlich beschreibt die Figur den Regelablauf für eine teilsimultane Druckmodulation $p_{ab}$ und $p_{auf}$ in den Radzylindern. Bis zum Zeitpunkt 1 steht der HZ-Kolben still und die Magnetventile sind alle geschlossen. Dann kommt eine Druckabbauforderung für den ersten Radzylinder. Gleichzeitig oder auch zeitlich versetzt tritt eine zweite Druckabbauforderung für einen zweiten Radzylinder auf. Damit ist nun ein simultaner oder teilsimultaner Druckabbau an zwei Rädern möglich. Gleiches gilt natürlich auch für drei oder vier Räder. Von Zeitpunkt 1 bis Zeitpunkt 2 ist die Umschaltzeit $T_{Um}$ dargestellt, in der, wie oben beschrieben, versucht wird, sich dem über das Druckmodell bekannten Druck des ersten Radzylinders zu nähern, damit beim Öffnen des zur ersten Radbremse gehörenden Schaltventils schon annähernd ein Druckausgleich zwischen dem HZ und dem ersten Radzylinder erreicht ist. Über die Druck-Volumen-Kennlinie wird nun während oder am Ende der Phase 1-2 das notwendige Volumen berechnet, dass dem ersten Radzylinder entnommen werden muss, um den Druck auf ein bestimmtes Niveau zu bringen. Sofern der Abbauwunsch für den zweiten Radzylinder ebenfalls schon bekannt ist, wird auch hier über die abgespeicherte Druck-Volumen-Kennlinie der benötigte HZ-Kolbenweg schon berechnet. Grundsätzlich kann dieser Rechenschritt allerdings auch erst zum Zeitpunkt 3 erfolgen. Der HZ-Kolben fährt nun zum Zeitpunkt 2 los und das zur ersten Radbremse zugehörige Magnetventil wird gleichzeitig angesteuert und geöffnet. Der Zeitbereich 2-3 stellt die gesamte Totzeit dar, bis man auch im Radzylinderdruck einen Effekt des Druckabbaus erkennen kann. Sobald über das Druckmodell und den damit berechneten Volumenfluss absehbar ist (Zeitpunkt 3), dass der HZ-Druck $p_{HZ}$ innerhalb der bekannten Ventilöffnungszeit den Raddruck $p_{R2}$ unterschreitet, wird das zweite Magnetventil $MV_2$ über $U_{MV2}$ angesteuert und geöffnet. Kurz vor dem Zeitpunkt 4 ist über das Druckmodell und den damit berechneten Volumenfluss bzw. Druckgradienten absehbar, dass der erste Radzylinder innerhalb der bekannten Ventilschließzeit den Zieldruck erreichen wird. Daher wird nun das Magnetventil $MV_1$ geschlossen. Zum Zeitpunkt 4 ist das Ventil $MV_1$ dann auch geschlossen und der Volumenfluss im Ventil $MV_1$ wird gestoppt. Daraus resultieren Druckschwingungen im Radzylinderdruck bei b. Durch eine PWM-Ansteuerung der Magnetventile können hier die Druckschwingungen im Raddruck reduziert werden. Zufällig erreicht der HZ-Kolben zum Zeitpunkt 4 auch seine Sollposition, die - wie oben beschrieben - zuvor berechnet wurde. Der Volumenfluss im Magnetventil $MV_2$ kann sich nun in der Einschwingzeit $T_e$ beruhigen bevor dann auch dieses Ventil $MV_2$ zum Zeitpunkt 5 geschlossen wird. Aufgrund der Einschwingzeit entstehen bei diesem Vorgang kaum Druckschwingungen am Radzylinder bei a. Hier würde eine PWM-Ansteuerung der Magnetventile keine Vorteile mit sich bringen. Im Anschluss an die Phase 5 bis 6 wiederholt sich der zuvor beschriebene Ablauf für den simultanen Druckaufbau. Wichtig für den simultanen Druckaufbau ist, dass bei geöffnetem Magnetventil $MV_i$ der HZ-Druck stets über dem niedrigsten Radzylinderdruck liegt, um einen positiven Druckgradienten zu erhalten und einen Druckausgleich zwischen zwei oder mehreren Rädern zu vermeiden. Allgemein würde beim simultanen oder teilsimultanen Abbau die PWM-Ansteuerung der Magnetventile den Vorteil bringen, dass man die Druckgradienten dann auch bei simultanen oder teilsimultanen Druckab- oder Druckaufbauten online beeinflussen könnte.

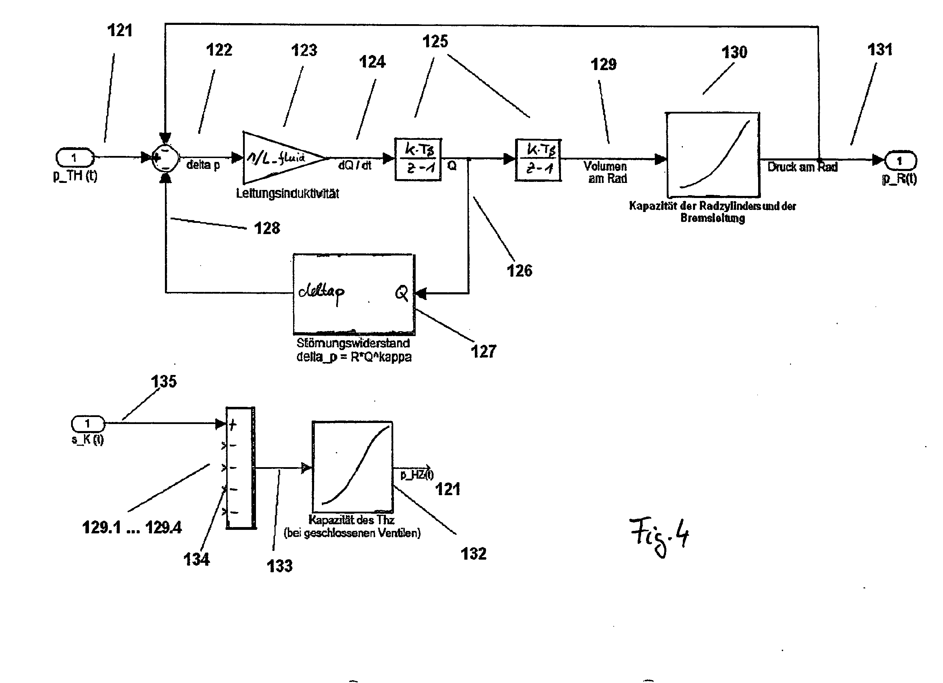

Die Figur 4 zeigt ein mögliches Druckmodell zur Berechnung der einzelnen Radzylinderdrücke. Als Eingangssignal 121 nutzt das Druckmodell den HZ-Druck $p_{HZ}(t)$, welcher nur im Eingeschwungenen Zustand (statisch) dem Raddruck in der Radbremse entspricht. Das Modell 122 bis 131 ist für ein Fahrzeug mit vier Radbremsen vierfach ausgeführt. Alternativ ist es möglich, dass das Druckmodell den HZ-Druck 121 über eine abgelegte Druck-Volumen-Kennlinie 132 des HZ berechnet. Damit ist auch dynamisch der Raddruck über entsprechende HZ-Stellung oder Kolbenweg einstellbar. Aufgabe des Druckmodells ist es eine dynamische bzw. hochfrequente Schätzung des Radzylinderdruckes $p_R(t)$ zu erhalten. Im Folgenden wird die Funktion der einzelnen Signale und Signalblöcke näher erläutert.

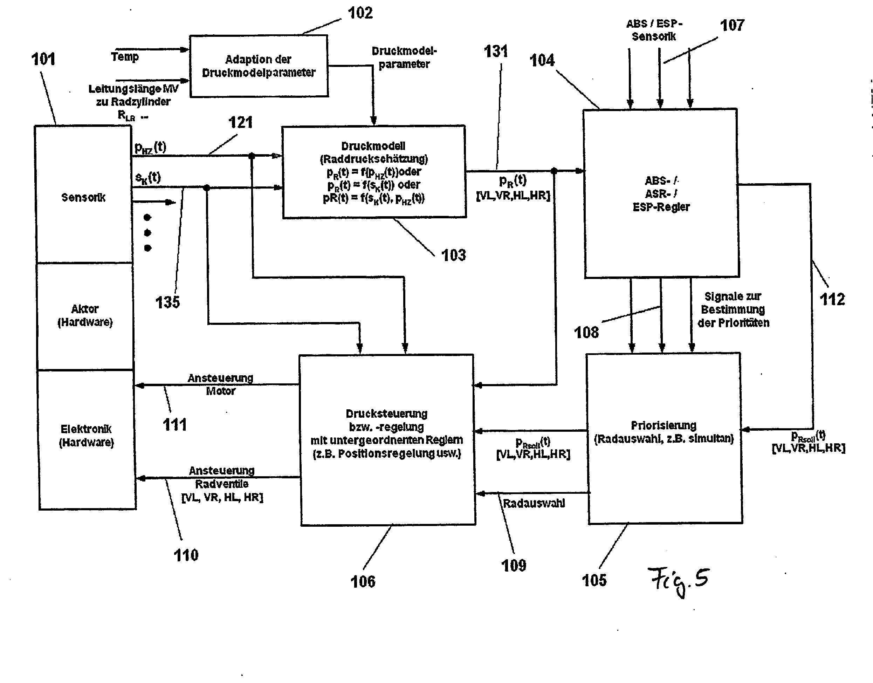

Der Kolbenweg bzw. die Kolbenposition $s_k(t)$ 135 des HZ wird als Eingangssignal für das Druckmodell 103 (siehe auch Figur 5) verwendet. Über die Summationsstelle 134 wird aus den Volumen am Rad 129.1 bis 129.3 und dem Kolbenweg $s_K(t)$ 135 das Volumen im HZ 133 berechnet. Unter Radvolumen versteht die Erfindung, das Volumen der Radbremse, der Zuleitungen und das Volumen des Arbeitsraumes des HZ. Über die Volumen-Druck-Kennlinie 132 des HZ berechnet sich der HZ-Druck $p_{HZ}(t)$ 121. Denkbar ist auch ein Abgleich des HZ-Drucksignals des Drucksensors mit dem simulierten Signal 121. Diese Maßnahme dient der Diagnose eines Drucksensorausfalls, da über die Kennlinie 132 die Kolbenposition des HZ mit einem bestimmten Druck korreliert. Zur Diagnose kann man auch den Phasenstrom der Motors heranziehen.

Verwendet man nur den HZ-Druck als Eingangssignal des Druckmodells so ist der Signalpfad 135 bis 121 nicht notwendig. Man erhält dann den HZ-Druck 121 direkt vom Drucksensor.

Über eine Summationsstelle erhält man den Differenzdruck 122, der über den Modellblock "hydraulische Ersatzinduktivität bzw. Leitungsinduktivität" 123, welcher für die Masse und/oder die Trägheit der Bremsflüssigkeit steht, und einen Integrator 126 zum Durchfluss Q führt. Der Signalblock 127 berücksichtigt den Strömungswiderstand des hydraulischen Pfades vom HZ über das Ventil durch die Bremsleitung bis hin zum Radzylinder. Der Modellparameter Ersatzströmungswiderstand R entspricht dem hydraulischen Widerstand des Pfads vom Kolben-Zylindersystem 14, HZ über das Schaltventil 17a, 17b, 17c, 17d bis zum Radzylinder der Radbremse bei laminaren Verhältnissen. Zusätzlich berücksichtigt der Signalblock 127 einen Parameter (kappa) der innerhalb des hydraulischen Pfades vom Kolben-Zylindersystem 14, HZ über das Schaltventil 17a, 17b, 17c, 17d bis zum Radzylinder der Radbremse eine Gewichtung der Strömungsverhältnisse laminar / turbulent darstellt. Über den zweiten Integrator 125 erhält man aus dem Druckfluss Q 126 das aktuelle Volumen am Rad 129 und daraus über die Volumen-Druck-Kennlinie des Radzylinders 130, welche die Kapazität bzw. die Steifheit des Radzylinders und der angeschlossenen Bremsleitungen beschreibt, den Druck am Rad 131. Des weiteren besteht die Möglichkeit im Druckmodell 103, (siehe Fig. 5) die in der Realität vorhandene Hysterese, u.a. aufgrund von Dichtungen usw., mit zu simulieren. Das erhöht die Schätzgenauigkeit des Druckmodells. Die verwendeten Druck-Volumen-Kennlinien werden dabei statisch bei Fahrzeugstart adaptiert bzw. aufgenommen und als Funktion mit dem zugehörigen Funktionsparametern oder als Tabelle abgelegt.

In Figur 5 ist ein möglicher Signalflussplan der Softwarestruktur dargestellt. Bezugszeichen 101 stellt dabei den Aktor $p_{HZ}(t) = f(s_K(t))$ dar, welcher detailliert in Fig.1 dargestellt ist. Die Sensorik des Aktors liefert den HZ-Druck 121 und den HZ-Kolbenweg 135 über die Auswertung eines Drehwinkelgebers. Weitere Sensorsignale, wie Fahrersolldruck, Pedalposition, Motorphasenströme, Batterieströme usw., sind hier nicht aufgeführt, können aber mit berücksichtigt werden.

Das Druckmodell 103 berechnet die aus den Signalen 121 und 135 die verschiedenen Radbremsendrücke 131 als Funktion des zeitlichen Druckverlaufs $p_{HZ}(t)$ im HZ und/oder des DK-Kolbenweges $s_K(t)$, oder als Funktion von beiden, wobei $p_R(t) = f(p_{Hz})$ oder $p_R(t) = f(p_{HZ}, s_K)$ oder $p_R(t) = f(S_K)$ gilt.

Über eine Adaption werden in Block 102 die Modellparameter des Druckmodells 103, wie z.B Ersatzströmungswiderstand, Ersatzleitungsinduktivität und Druck-Volumen-Kennlinie bzw. Druck-Volumen-Kennlinie des Radzylinders und des HZ bzw. THZ, über die Temperatur, z.B. die Fahrzeugumgebungstemperatur oder mittels der durch einen Temperatursensor an einem Magnetventil oder der temperaturproportionalen Widerstandsmessung des Magnetventils gemessene Temperatur, adaptiert. Die Adaptionsvorschift kann dabei während der Entwicklung des Systems in Temperaturversuchen ermittelt werden und hinterlegt werden. Auch die Parameter der oben erwähnten Hysteresesimulation können abhängig von der Temperatur adaptiert werden. Verschiedene Fahrzeugspezifische Parameter, wie z. B. Leitungslängen oder Ein- und Ausschaltzeit des Magnetventils, können bei Erstinbetriebnahme des Fahrzeugs gemessen oder aus einer Datei programmiert werden. Dazu sind entweder in einer Tabelle abhängig von der Temperatur die Modellparameter hinterlegt oder die Modellparameter errechnet und an das Modell weitergegeben. Sollten z.B. Veränderungen im Übergangsverhalten auftreten, ist es über die Adaption ebenfalls möglich, die Parameter des Modells anzupassen. Der Abgleich des Druckmodells und damit der Parameter des Druckmodells kann mehrmals hintereinander oder in kürzeren Zeitintervallen erfolgen, wenn das Druckmodell von den tatsächlich gemessenen Werten abweicht. Das Druckmodell wird ständig mitgerechnet und ist besonders im Zusammenhang mit der Druckmodulation bei ESP/ABS 104 oder anderen übergeordneten Reglern sehr wichtig für die Genauigkeit der Druckstellung. Die Radzylinderdrücke $p_R(t)$ aus dem Druckmodell werden dem ABS/ESP-Regler zugeleitet. Der ESP/ABS-Regler 104 und besonders die Drucksteuerung bzw. Druckregelung 106 sind auf Radbremsendrücke $p_R(t)$ als Regelgrößen angewiesen. Der ESP/ABS-Reger berechnet aufgrund der ABS/ESP-Sensorsignale wie Radgeschwindigkeiten, Querbeschleunigung, Gierrate usw. und der Radbremsendrücke $p_R(t)$ eine Radbremsen-Solldruck $p_{Rsoll}(t)$. Alternativ kann der Radbremsen-Solldruck $p_{Rsoll}(t)$ auch nur ein Differenzdruck sein oder in seinem Informationsgehalt um den Druckgradienten erweitert werden. Der Radbremsen-Solldruck wird selbstverständlich für jedes Rad individuell berechnet.

Um die Abläufe des Druckreglers 106 zu priorisieren ist dem Druckregler noch der Funktionsblock "Priorisierungeinrichtung" 105 vorgeschaltet, der aufgrund der verschiedener Signale die zur Bestimmung der Prioritäten 108, z.B. werden Radschupf, Parameter der Fahrzeugquerdynamik, Druckregelabweichung, usw.,

herangezogen werden, die Radauswahl 109 trifft. Die Radauswahl gibt dem Druckregler 106 vor, welchen Druck welcher Radbremse(n) er als nächstes einstellen muss. Zum Beispiel hat eine Druckabbauanforderung höher Priorität als ein geforderter Druckabbau an einem anderen Rad und wird deshalb zuerst ausgeführt. Auch ist es z.B. nicht gestattet an einem Rad zwei Druckaufbauten nacheinander durchzuführen ohne in der Zwischenzeit ein anderes Rad bedient zu haben. Die Priorisierung trifft zusätzlich die Entscheidung ob ein einzelnes Rad oder simultaner Druckaufbau bzw. Druckabbau erfolgen muss und wie viele Räder daran beteiligt sind. Als Kriterium für die Priorisierung gelten vorzugsweise Radgeschwindigkeit, Radbeschleunigung, Kurvenfahrt, $\mu$-Sprung (positiver und negativer), $\mu$-Split Fahrbahn und Zeitpunkt der Regelung. Wird z.B. beim ersten Regelzyklus an mehreren Rädern eine Überschreitung des Sollschlupfes oder eine Radbeschleunigungsschwelle festgestellt, so wird entsprechend der Anzahl der beteiligten Räder auf simultan oder teilsimultan geschaltet. Tritt während eines Druckabbaus eines Rades eine Überschreitung des Sollschlupfes mit höherer Radbeschleunigung, z.B. -5g, bei einem anderen Rad auf, so wird dieses teilsimulatan geregelt. Ist der Regelzyklus nahezu beendet findet keine Umschaltung mehr statt. Die jeweiligen Sollwerte für Schlupf und Beschleunigung für simultan oder teilsimultan werden bei Kurvenfahrt im Sinne kleinerer Werte geändert, um die volle Stabilität zu erhalten. Bei höheren gleitzeitigen Radwiederbeschleunigungen z.B. infolge einer entsprechenden Reibwertänderung der Fahrbahn kann ebenfalls bei entsprechenden Schlupfwerten auf simultan oder teilsimultan umgeschaltet werden. D.h., bei allen Fällen in denen Gewinn von Bremsweg oder Fahrstabilität erzielbar ist, erfolgt die Umschaltung auf simultan oder teilsimultan. Für den Fachmann bedeutet dies, dass ein optimaler Schlupf vorliegen muss.

Die jeweiligen zeitlichen Abläufe, wie sie in Figur 2 und Figur 3 dargestellt sind, werden dann durch die Drucksteuerung bzw. -regelung 106 berechnet. Über abgespeicherte Druck-Volumen-Kennlinien wird hier unter Berücksichtigung der Hysterese der Radzylinder der geforderte HZ-Kolbenweg berechnet. Ein idealerweise untergeordneter Positionsregler stellt dann über Steuersignale 11 den gewünschten Kolbenweg ein. Dazu werden die jeweiligen Schaltventile 17a, 17b, 17c, 17d in richtiger zeitlicher Abfolge angesteuert 110.

Es ist durchaus vorstellbar, dass das Druckmodell 103 benutzt wird, um zukünftige Raddrücke zu schätzen. Dies kann besonders für die Drucksteuerung 106 wichtig sein, um die richtigen Ventilschaltzeitpunkte zu berechnen. Die ermittelten Werte können dabei in einem Speicher zwischengespeichert werden.

<u>Bezugszeichenliste:</u>

| | |
|---|---|
| 1-9 | Phasen im Regelzyklus |
| $p_{HZ}$ | Hauptzylinderdruck |
| $P_R$ | Radzylinderdruck |
| $P_{Rsoll}$ | Radzylinder-Solldruck |
| $p_{auf}$ | Druckaufbau |
| $p_{ab}$ | Druckabbau |
| $p^*_{ab}$ | Druckänderungsgeschwindigkeit bei Druckabbau |
| $p^*_{an}$ | Druckänderungsgeschwindigkeit bei Druckaufbau |
| $s_k$ | HZ-Kolbenweg |
| $s^*_k$ | HZ-Kolbengeschwindigkeit |
| $T_E$ | Einschwingzeit vor Ventilschließen |
| $T_{Um}$ | Umschaltzeit vom Beginn Kolbenbewegung zum Öffnen des Ventils |
| $T_{MUX}$ | Gesamte Zeit, um an einem oder mehreren Rädern den gewünschten Druck einzustellen |
| $t_v$ | Verzugszeit zum Schließen des Magnetventils |
| a | Übergangsverlauf im Druck-Zeitverhalten mit Einschwingzeit vor Ventilschließen |
| b | Übergangsverlauf im Druck-Zeitverhalten bei harten Ventilschließen ohne Einschwingzeit |
| $MV_i$ | Magnetventil/Schaltventil |
| $U_{MV}$ | Spannungsverlauf 2/2-Magnetventil |
| RL | Strömungswiderstand in der Leitung vom HZ bzw. THZ zum Magnetventil/Schaltventil |
| RV | Strömungswiderstand im Magnetventil |
| $RV_R$ | Verbindungsleitung vom Magnetventil zum Radzylinder |
| R | $RV + RV_R + RL$ |
| 10 | EC-Motor |
| 11 | Spindel |
| 12 | Spindelrückstellung |
| 13 | Drehwinkelgeber (Positionsgeber) |
| 14 | HZ bzw. THZ |
| 15 | Druckleitung vom Druckstangenkolben |
| 16 | Druckleitung vom Schwimmkolben |
| 17a-17d | 2/2-Magnetventile als Schaltventile |
| 18a-18d | Radzylinder |
| 19 | Druckgeber |
| 101 | Aktor Hardware im Elektronik und Sensorik |
| 102 | Softwarefunktionsblock "Berechnungsvorschrift bzw. Adaption der Druckmodellparameter |
| 103 | Softwarefunktionsblock " Druckmodell" |
| 104 | Softwarefunktionsblock "ABS/ASR/ESP-Regler" |
| 105 | Softwarefunktionsblock "Priorisierung" |
| 106 | Softwarefunktionsblock "Drucksteuerung bzw.-regelung" |
| 107 | Sensorsignale der ESP/ABS-Sensorik |
| 108 | Signale zur Bestimmung der Prioritäten |
| 109 | Signal zur Vorgabe der Radauswahl |
| 110 | Ansteuerung der Schaltventile |

111 Ansteuerung Motor
112 Radsolldrücke $p_{Rsoll}(t)$
121 Hauptzylinderdruck $p_{HZ}(t)$
122 Differenzdruck zur Bestimmung des Druckflusses
123 hydr. Leitungsinduktivität
124 dQ/dt
125 Integratoren
126 Durchfluss Q
127 Strömungswiderstand des Pfads vom Kolben-Zylindersystem (14, HZ) über das Schaltventil (17a, 17b, 17c, 17d) bis zum Radzylinder
128 Druckabfall an 127
129.i aktuelles Volumen am Rad
130 Volumen-Druck-Kennlinie (Kapazität) des Radzylinders und der zugehörigen Anschlussleitungen
131 Radzylinderdruck $p_R(t)$
132 Volumen-Druck-Kennlinie (Kapazität) des Hauptbremszylinders bei geschlossenen Schaltventilen
133 aktuelles Volumen im Hauptbremszylinder
134 Summationsblock
135 HZ-Kolbenweg $s_K(t)$

**Patentansprüche**

1. Bremssystem mit einem Bremskraftverstärker, dessen Kolben-Zylindersystem (14, HZ, THZ), insbesondere durch Übertragungsmittel, mechanisch oder hydraulisch von einem Elektromotor angetrieben ist, wobei mindestens ein Arbeitsraum des Kolben-Zylindersystems (14, HZ, THZ) über hydraulische Leitungen mit mindestens zwei, Radbremsen in Verbindung ist, wobei jeweils einer Radbremse ein 2/2-Wege-Schaltventil (17a, 17b, 17c, 17d) zugeordnet ist und die hydraulischen Verbindungsleitungen zwischen den Radbremsen (18a, 18b, 18c, 18d) und dem Kolben-Zylindersystem (14, HZ, THZ) wahlweise getrennt oder gemeinsam mittels der 2/2-Wege-Schaltventile (17a, 17b, 17c, 17d) verschließbar ist bzw. sind, so dass in den Radbremsen (18a, 18b, 18c, 18d) nacheinander im Sinne eines Multiplexverfahrens und/oder gleichzeitig ein Druck einregelbar ist, wobei der Elektromotor und die Schaltventile (17a, 17b, 17c, 17d) von einer Regeleinrichtung angesteuert werden, und dass die hydraulische Verbindungsleitung vom Arbeitsraum des Kolben-Zylindersystems (14, HZ, THZ) zum jeweiligen als Magnetventil ausgebildeten Schaltventil einen Strömungswiderstand ($RL_i$) und jedes Schaltventil zusammen mit der hydraulischen Leitung zum Radzylinder (17a, 17b, 17c, 17d) einen Strömungswiderstand ($RV_i$) aufweist, **dadurch gekennzeichnet, dass** die Strömungswiderstände ($RL_i$) und ($RV_i$) klein sind, derart, dass die Kolbengeschwindigkeit des Kolbens des Kolbenzylindersystems (14, HZ, THZ) den Druckabbaugradienten und Druckaufbaugradienten in jeder Radbremse (18a, 18b, 18c, 18d) bestimmt, wobei der Strömungswiderstand ($RL_i$) kleiner als der Strömungswiderstand ($RV_i$) ist, und dass die Regeleinrichtung die Kolbenbewegung und Kolbengeschwindigkeit beim Druckaufbau und Druckabbau in Abhängigkeit der Druck-Volumen-Kennlinie der Radbremsen (18a, 18b, 18c, 18d) einregelt bzw, einsteuert, und dass die Strömungswiderstände ($RL_i$) und ($RV_i$), insbesondere die Summe der Strömungswiderstände ($RL_i$) und ($RV_i$) jeder Radbremse (18a, 18b, 18c, 16d), so ausgelegt sind bzw. ist, dass bei maximaler Dynamik des Kolben-Zylindersystems (HZ) und dessen Antrieb sowie mindestens zwei oder mehr geöffneten Schaltventilen (17a, 17b, 17c, 17d) aufgrund der gleichzeitigen Volumenaufnahme oder Volumenabgabe der Radbremsen (18a, 18b, 18c, 18d) in der Zeit, in der die Schaltventile (17a, 17b, 17c, 17d) geöffnet sind, kein Druckausgleich zwischen den Radbremsen (18a, 18b, 18c, 18d) erfolgt.

2. Bremssystem nach Anspruch 1, **dadurch gekennzeichnet, dass** die Einstellung des Drucks in jeder Radbremse auf der Basis der Druck-Volumen-Kennlinie des jeweiligen Rades über eine Wegsteuerung des Kolbens des Kolben-Zylindersystems (14, HZ) erfolgt,

3. Bremssystem nach einem der vorhergehenden Ansprüche, **dadurch gekennzeichnet, dass** ein übergeordneter Regler, insbesondere der ABS- und ESP-Regler, den Solldruck für das Kolben-Zylindersystem (14, HZ) vorgibt.

4. Bremssystem nach einem der vorhergehenden Ansprüche, **dadurch gekennzeichnet, dass** die Regeleinrichtung, insbesondere während des Regelvorgangs, laufend die Druckniveaus der Radbremsen anhand eines Druckmodells berechnet.

5. Bremssystem nach Anspruch 4, **dadurch gekennzeichnet, dass** eine Eingangsvariable des Druckmodells der Ist-Druck ($p_{HZ}(t)$) im Kolben-Zylindersystem (14, HZ) oder der Kolbenweg ($s_K(t)$) des Kolbens des Kolbenzylindersystems (14, HZ) ist.

6. Bremssystem nach Anspruch 4 oder 5, **dadurch g e - kennzeichnet**, dass das Druckmodell als Modellparameter einen Ersatzströmungswiderstand verwendet, der dem hydraulischen Widerstand des Pfads vom Kolben-Zylindersystem (14, HZ) über das Schaltventil (17a, 17b, 17c, 17d) bis zum Radzylinder der Radbremse entspricht, und dass das Druckmodell als Modellparameter eine hydraulische Ersatzinduktivität berücksichtigt, die für die Masse und/oder Trägheit der Bremsflüssigkeit steht und/oder dass das Druckmodell als Modellparameter die Druck-Volumen-Kennlinie jeder einzelnen Radbremse beinhaltet, welche die Kapazität bzw. Volumenaufnahme der Radbremse darstellt.

7. Bremssystem nach Anspruch 6, **dadurch gekennzeichnet, dass** das Druckmodell innerhalb des hydraulischen Pfades vom Kolben-Zylindersystem (14, HZ) über das Schaltventil (17a, 17b, 17c, 17d) bis zum Radzylindern der Radbremse eine Gewichtung der Strömungsverhältnisse laminar und turbulent berücksichtigt.

8. Bremssystem nach einem der Ansprüche 4 bis 5, **dadurch gekennzeichnet, dass** das Druckmodell den Schließzeitpunkt jedes Schaltventils (17a, 17b, 17c, 17d) in Abhängigkeit vom berechneten Ist-Druck, dem aktuellen Druck im Arbeitsraum des Kolben-Zylindersystems, sowie der bei der Endprüfung durch Messung ermittelten Schaltzeiten der als Magnetventile ausgebildeten Schaltventile und dem jeweiligen Druckgradienten berechnet.

9. Bremssystem nach einem der Ansprüche 4 bis B, **dadurch gekennzeichnet, dass** die Modellparameter des Druckmodells eine Funktion der Temperatur, insbesondere der Umgebungstemperatur, der Schaltventile (17a, 17b, 17c, 17d), sind und/oder über die Temperatur adaptiert oder angepasst werden.

10. Bremssystem nach einem der Ansprüche 4 bis 9, **dadurch gekennzeichnet, dass** die Regeleinrichtung das Druckmodell überprüft und/oder dessen Werte und Parameter abgleicht, in dem die Regeleinrichtung den Ist-Druck im Kolben-Zylindexsystem (14, HZ) bei geöffnetem Schaltventil (17a, 17b, 17c, 17d) nach Abwarten einer kurzen Druckeinschwingzeit ermittelt.

11. Bremssystem nach einem der Ansprüche 4 bis 10, **dadurch gekennzeichnet, dass** im Druckmodell die im hydraulischen System enthaltene Hysterese mitgerechnet bzw, berücksichtigt wird.

12. Bremssystem nach einem der Ansprüche 4 bis 11, **dadurch gekennzeichnet, dass** die Regeleinrichtung mittels des Druckmodells (103) den jeweiligen Druck ($p_R$(t)) in den Radbremsen berechnet und die berechneten Druckwerte $p_k$(t)) zumindest einem ABS-/ESP-Regler (104) und einer Druckregeleinrichtung (106) übermittelt, wobei die Druckregeleinrichtung (106) zumindest die 2/2-Wege-Schaltventile (17a, 17b, 17c, 17d) sowie den Elektromotor ansteuert, und dass eine Priorisierungseinrichtung (105) zumindest anhand der von dem ABS-/ESP-Regler (104) übermittelten Daten eine Radauswahl vornimmt und diese der Druckregeleinrichtung (106) übermittelt.

13. Bremssystem nach Ansprüch 12, **dadurch gekennzeichnet, dass** die Priorisierungseinrichtung (105) die Priorisierung der Radauswahl anhand des Kriteriums "optimaler Bremsweg" und/oder "Stabilität der Regelung" vornimmt.

14. Bremssystem nach einem der Ansprüche 4 bis 13, **dadurch gekennzeichnet, dass** die Regeleinrichtung die Druckmodellparameter anhand der ermittelten Temperatur im Bremssystem oder an bestimmten Stellen im Bremssystem, insbesondere in den Radbremsen, Hydraulikleitungen, 2/2-Wege-Schaltventilen und/oder dem Kolben-Zylinder-System ermittelten Temperaturen, adaptiert.

15. Bremssystem nach einem der Ansprüche 12, 13 oder 14, wenn vom Anspruch 12 abhängig, **dadurch gekennzeichnet, dass** die Priorisierungseinrichtung (105) bei einem gerade erfolgenden Druckabbau in einer oder mehreren Radbremsen nicht gleichzeitig einen Druckaufbau in einer oder mehreren Radbremsen zulässt und umgekehrt.

16. Bremssystem nach Anspruch 12 oder einem der Ansprüche 12 und 13 bis 15, **dadurch gekennzeichnet, dass** die Priorisierungseinrichtung (105) bei einem Radschlupf größer als die Schlupfgrenzwert und/oder bei einer Radbeschleunigung oder Verzögerung von größer 5g bzw. -5g auf simultanen bzw. gleichzeitigen oder teil-simultanen bzw, zeitlich überlappenden Druckaufbau bzw. Druckabbau schaltet.

17. Bremssystem nach einem der vorhergehenden Ansprüche, **dadurch gekennzeichnet, dass** der Kolben des Kolben-Zylindersystems (14, HZ, THZ) und die Leitungen vom Kolben-Zylindersystems (14, HZ, THZ) zu den Schaltventilen (17a, 17b, 17c, 17d) steif ausgelegt sind.

18. Verfahren zur Einstellung eines Bremsdrucks in mindestens einer Radbremse unter Verwendung eines Bremssystems nach einem der vorhergehenden Ansprüche, **dadurch gekennzeichnet, dass** der Druck in mindestens zwei Radbremsen (18a, 18b, 18c, 18d) nacheinander, gleichzeitig, d.h. simultan, oder zeitlich überlappend, d.h. teilsimultan, aufgebaut oder abgebaut wird.

19. Verfahren zur Einstellung eines Bremsdrucks in mindestens einer Radbremse unter Verwendung eines Bremssystems nach einem der Ansprüche 1 bis 17 oder nach dem Verfahren nach Anspruch 18, **dadurch gekennzeichnet, dass** beim gleichzeitigen Druckaufbau oder Druckabbau in mindestens zwei Radbremsen (18a, 18b, 18c, 18d) die Druckdifferenz zwischen dem Arbeitsraum des Kolben-Zylindersystems (14, THZ) und den jeweiligen Radbremsen (18a, 18b, 18c, 18d) so groß gewählt wird, dass kein Druckausgleich zwischen den jeweiligen Radbremsen (18a, 18b, 18c, 18d) erfolgt.

**20.** Verfahren nach Anspruch 19, **dadurch gekennzeichnet, dass** der Kolben des Kolben-Zylindersystems (14, THZ) zur Aufrechterhaltung der Druckdifferenz bei geöffneten Schaltventilen (17a, 17b, 17c, 17d) von der Regeleinrichtung nachgestellt wird.

**21.** Verfahren zur Einstellung eines Bremsdrucks in mindestens einer Radbremse unter Verwendung eines Bremssystems nach einem der Ansprüche 1 bis 17 oder nach einem Verfahren nach einem der Ansprüche 18 bis 20, **dadurch gekennzeichnet, dass** der Druck im Arbeitsraum des Kolben-Zylindersystems (14, HZ) vor dem Beginn des Druckabbaus auf den in der jeweiligen Radbremse (18a, 18b, 18c, 18d) befindlichen Druck oder einen niedrigeren Druck eingestellt oder eingeregelt wird, und danach das zugehörige Schaltventil (17a, 17b, 17c, 17d) von der Regeleinrichtung geöffnet wird, und dass der Druck im Arbeitsraum des Kolben-Zylindersystems (14, HZ) vor dem Beginn des Druckaufbaus auf den in der jeweiligen Radbremse (18a, 18b, 18c, 18d) befindlichen Druck oder einen höheren Druck eingestellt oder eingeregelt wird, und danach das zugehörige Schaltventil (17a, 17b, 17c, 17d) von der Regeleinrichtung geöffnet wird.

**Claims**

**1.** Braking system with a brake booster, whose piston-cylinder system (14, $HZ^1$, $THZ^2$), is driven, in particular by means of transmission, mechanically or hydraulically by an electric motor, whereby at least one working chamber of the piston-cylinder system (14, HZ, THZ) is connected via hydraulic lines to at least two wheel brakes, whereby in each case a 2/2-way switching valve (17a, 17b, 17c, 17d) is assigned to a wheel brake and the hydraulic lines connecting the wheel brakes (18a, 18b, 18c, 18d) to the piston-cylinder system (14, HZ, THZ) are either separately or jointly closable by means of the 2/2-way switching valves (17a, 17b, 17c, 17d), so that in the wheel brakes (18a, 18b, 18c, 18d) a pressure can be adjusted, consecutively in the sense of multiplex operation and/or simultaneously, whereby the electric motor and the switching valves (17a, 17b, 17c, 17d) are controlled by a control device, and that the hydraulic connection line from the working chamber of the piston-cylinder system (14, HZ, THZ) to the particular switching valve constructed as a solenoid valve has a flow resistance ($RL_1$) and each switching valve, together with the hydraulic line to the wheel cylinder (17a, 17b, 17c, 17d), has a flow resistance ($RV_1$), **characterised in that** the flow resistances ($RL_1$) and ($RV_1$) are small, such that the piston speed of the piston of the piston-cylinder system (14, HZ, THZ) determines the pressure decrease gradient and pressure increase gradient in each wheel brake (18a, 18b, 18c, 18d), whereby the flow resistance ($RL_1$) is smaller than the flow resistance ($RV_1$), and that the control device adjusts or controls the piston movement and piston speed in the case of pressure increase and pressure decrease as a function of the characteristic pressure-volume curve of the wheel brakes (18a, 18b, 18c, 18d), and that the flow resistances ($RL_1$) and ($RV_1$), in particular the sum of the flow resistances ($RL_1$) and ($RV_1$) of each wheel brake (18a, 18b, 18c, 18d), are/is designed such that in the case of maximum dynamics of the piston-cylinder system (HZ) and its drivetrain and also of at least two or more open switching valves (17a, 17b, 17c, 17d) owning to the simultaneous uptake or release of volume by the wheel brakes (18a, 18b, 18c, 18d) in the time in which the switching valves (17a, 17b, 17c, 17d) are open no pressure equalisation occurs between the wheel brakes (18a, 18b, 18c, 18d).

**2.** Braking system according to Claim 1, **characterised in that** the adjustment of the pressure in each wheel brake occurs on the basis of the characteristic pressure-volume curve of the particular wheel by means of path control of the piston of the piston-cylinder system (14, HZ).

**3.** Braking system according to any one of the preceding claims, **characterised in that** a higher-level controller, in particular the ABS and ESP controller, specifies the target pressure for the piston-cylinder system (14, HZ).

**4.** Braking system according to any one of the preceding claims, **characterised in that** the control device, in particular during the control process, continuously calculates the pressure level of the wheel brakes using a pressure model.

**5.** Braking system according to Claim 4, **characterised in that** an input variable of the pressure model is the actual pressure ($p_{HZ}(t)$) in the piston-cylinder system (14, HZ) or the piston stroke ($s_k(t)$) of the piston of the piston-cylinder system (14, HZ).

**6.** Braking system according to Claim 4 or 5, **characterised in that** the pressure model uses, as a model parameter, a substitute flow resistance which corresponds to the hydraulic resistance of the path from the piston-cylinder system (14, HZ) via the switching valve (17a, 17b, 17c, 17d) up to the wheel cylinder of the wheel brake, and that the pressure model, as a model parameter, takes into account a hydraulic substitute inductivity which represents the mass and/or inertia of the brake fluid and/or that the pressure model contains, as a model parameter, the characteristic pressure-volume curve of each individual wheel brake, which describes the capacity of or uptake of volume by the wheel brake.

7. Braking system according to Claim 6, **characterised in that** the pressure model takes into account a weighting of the laminar and turbulent flow conditions within the hydraulic path from the piston-cylinder system (14, HZ) via the switching valve (17a, 17b, 17c, 17d) up to the wheel cylinder of the wheel brake.

8. Braking system according to any one of Claims 4 to 5, **characterised in that** the pressure model calculates the closing point (in time) of each switching valve (17a, 17b, 17c, 17d) as a function of the calculated actual pressure, of the current pressure in the working chamber of the piston-cylinder system, and also of the switching times, determined during the final test by means of measurement, of the switching valves designed as solenoid valves and of the particular pressure gradient.

9. Braking system according to any one of Claims 4 to 8, **characterised in that** the model parameters of the pressure model are a function of temperature, in particular of the ambient temperature, of the switching valves (17a, 17b, 17c, 17d) and/or are adapted or adjusted by means of the temperature.

10. Braking system according to any one of Claims 4 to 9, **characterised in that** the control device checks the pressure model and/or equalises its values and parameters by means of the control device determining the actual pressure in the piston-cylinder system (14, HZ) with the switching valve (17a, 17b, 17c, 17d) open after waiting for a short time for the pressure to build up.

11. Braking system according to any one of Claims 4 to 10, **characterised in that** in the pressure model, the hysteresis present in the hydraulic system is also taken into account.

12. Braking system according to any one of Claims 4 to 11, **characterised in that** the control device calculates the relevant pressure ($p_R(t)$) in the wheel brakes using the pressure model (103) and transmits the pressure values calculated ($p_R(t$) to at least one ABS/ESP controller (104) and one pressure control device (106), whereby the pressure control device (106) controls at least the 2/2-way switching valves (17a, 17b, 17c, 17d) and the electric motor, and that a prioritisation device (105) performs a wheel selection at least on the basis of the data transmitted by the ABS/ESP controller (104) and transmits this to the pressure control device (106).

13. Braking system according to Claim 12, **characterised in that** the prioritisation device (105) performs the prioritisation of the wheel selection using the criterion "optimum brake path" and/or "stability of control".

14. Braking system according to any one of Claims 4 to 13, **characterised in that** the control device adapts the pressure model parameters using the temperature determined in the braking system or at particular points in the braking system, in particular in the wheel brakes, hydraulic lines, 2/2-way switching valves and/or the piston-cylinder system.

15. Braking system according to any one of Claims 12, 13 or 14, if dependent on Claim 12, **characterised in that** the prioritisation device (105) does not, in the event of pressure decreasing at a particular time in one or more wheel brakes, allow a pressure increase at the same time in one or more wheel brakes, and vice versa.

16. Braking system according to Claim 12 or any one of Claims 12 and 13 to 15, **characterised in that** the prioritisation device (105), in the event of a wheel slip larger than the slip limit value and/or in the event of a wheel acceleration or delay of larger that 5g or - 5g, switches to a pressure increase or pressure decrease that is simultaneous or partially simultaneous, or overlapping in time.

17. Braking system according to any one of the preceding claims, **characterised in that** the piston of the piston-cylinder system (14, Hz, THZ) and the lines from the piston-cylinder system (14, THZ, THZ) to the switching valves (17a, 17b, 17c, 17d) have a rigid design.

18. Method for adjusting a brake pressure in at least one wheel brake using a braking system according to any one of the preceding claims, **characterised in that** the pressure in at least two wheel brakes (18a, 18b, 18c, 18d) is increased or decreased consecutively, simultaneously, or in a way that is overlapping in time, i.e. partially simultaneously.

19. Method for adjusting a brake pressure in at least one wheel brake using a braking system according to any one of Claims 1 to 17 or according to the method according to Claim 18, **characterised in that** in the event of a simultaneous increase or decrease in pressure in at least two wheel brakes (18a, 18b, 18c, 18d), the pressure difference between the working chamber of the piston-cylinder system (14, THZ) and the particular wheel brakes (18a, 18b, 18c, 18d) is selected to be sufficiently large that there is no pressure equalisation between the relevant wheel brakes (18a, 18b, 18c, 18d).

**20.** Method according to Claim 19, **characterised in that** the piston of the piston-cylinder system (14, THZ) is readjusted by the control device in order to maintain the pressure difference when the switching valves (17a, 17b, 17c, 17d) are open.

**21.** Method for setting a brake pressure in at least one wheel brake using a braking system according to any one of Claims 1 to 17 or according to a method according to any one of Claims 18 to 20, **characterised in that** the pressure in the working chamber of the piston-cylinder system (14, HZ) is set or adjusted before the beginning of the pressure decrease to the pressure that is found in the particular wheel brake (18a, 18b, 18c, 18d) or a lower pressure, and that subsequently the associated switching valve (17a, 17b, 17c, 17d) is opened by the control device, and that the pressure in the working space of the piston-cylinder system (14, HZ) is set or adjusted before the beginning of the pressure increase to the pressure that is found in the particular wheel brake (18a, 18b, 18c, 18d) or a higher pressure, and that subsequently the associated switching valve (17a, 17b, 17c, 17d) is opened by the control device.

## Revendications

**1.** Système de freinage à assistance de freinage dont le système piston/cylindre (14, HZ, THZ) est entraîné par un moteur électrique mécaniquement ou hydrauliquement, en particulier par un support de transmission, où au moins une chambre de travail du système piston/cylindre (14, HZ, THZ) est reliée au moyen de conduites hydrauliques à au moins deux freins sur roues, où une soupape de commande à 2/2 voies (17a, 17b, 17c, 17d) est respectivement affectée à un frein sur roue, et les conduites de liaison hydrauliques entre les freins sur roues (18a, 18b, 18c, 18d) et le système piston/cylindre (HZ, THZ) peuvent être fermées de façon sélectivement séparée ou commune au moyen des soupapes de commande à 2/2 voies (17a, 17b, 17c, 17d), de telle manière qu'une pression peut être réglée dans les freins sur roues (18a, 18b, 18c, 18d) successivement à la manière d'un procédé multiplexé, ou simultanément, le moteur électrique et les soupapes de commande (17a, 17b, 17c, 17d) étant commandés par un dispositif de régulation, et que la conduite de liaison hydraulique entre la chambre de travail du système piston/cylindre (14, HZ, THZ) et la soupape de commande correspondante, conçue en tant qu'électrovalve, présente une résistance à l'écoulement (RL$_i$) et chaque soupape de commande présente, avec la conduite hydraulique vers le cylindre de frein sur roue (17a, 17b, 17c, 17d) une résistance à l'écoulement (RV$_i$), **caractérisé en ce que** les résistances à l'écoulement (RL$_i$) et (RV$_i$) sont faibles de telle façon que la vitesse du piston (HZ) du système piston/cylindre (14, HZ, THZ) détermine le gradient de réduction de pression et le gradient d'établissement de pression dans chaque frein sur roue (18a, 18b, 18c, 18d), la résistance à l'écoulement (RL$_i$) étant inférieure à la résistance à l'écoulement (RV$_i$), et que le dispositif de régulation régule ou commande le mouvement du piston et la vitesse du piston lors de l'établissement de pression et de la réduction de pression en fonction de la caractéristique pression/volume des freins sur roues (18a, 18b, 18c, 18d), et que les résistances à l'écoulement (RL$_i$) et (RL$_i$), en particulier la somme des résistances à l'écoulement (RL$_i$) et (RL$_i$) de chaque frein sur roue (18a, 18b, 18c, 18d) est adaptée de telle sorte que lors d'une dynamique extrême du système piston/cylindre (HZ) et de son entraînement, ainsi qu'au moins d'une, en particulier deux ou plusieurs soupapes de commande ouvertes (17a, 17b, 17c, 17d) du fait de l'admission de volume ou rejet de volume simultané des freins sur roues (18a, 18b, 18c, 18d) au moment où les soupapes de commande (17a, 17b, 17c, 17d) sont ouvertes, aucun équilibrage des pression n'a lieu entre les freins sur roues (18a, 18b, 18c, 18d).

**2.** Système de freinage selon la revendication 1, **caractérisé en ce que** le réglage de la pression dans chaque frein sur roue a lieu en fonction de la caractéristique pression/volume de la roue correspondante par l'intermédiaire d'une commande positive du piston du système piston/cylindre (14, HZ).

**3.** Système de freinage selon une des revendications précédentes, **caractérisé en ce qu'**un régulateur de niveau supérieur, en particulier le régulateur ABS et ESP détermine la pression cible pour le système piston/cylindre (14, HZ).

**4.** Système de freinage selon une des revendications précédentes, **caractérisé en ce que** le dispositif de régulation, en particulier pendant le processus de régulation, calcule en continu le niveau de pression des freins sur roues à l'aide d'un modèle de pression.

**5.** Système de freinage selon la revendication 4, **caractérisé en ce qu'**une variable d'entrée du modèle de pression est la pression réelle (p$_{HZ}$(t)) dans le système piston/cylindre (14, HZ) ou la course de piston (s$_K$(t)) du système piston/cylindre (14, HZ).

**6.** Système de freinage selon la revendication 4 ou 5, **caractérisé en ce que** le modèle de pression utilise, en tant que paramètres de modèle, une résistance équivalente à l'écoulement qui correspond à la résistance hydraulique du chemin du système piston/cylindre (14, HZ) au delà de la soupape de commande (17a, 17b, 17c, 17d) jusqu'au cylindre de roue du frein sur roue, et que le modèle de pression prend en compte, en tant que paramètres de modèle, une inductance équivalente qui reflète la masse et/ou l'inertie du liquide de frein et/ou que le modèle de pression comporte, en tant que paramètres de modèle, la caractéristique pression/volume de chaque frein sur roue individuel qui représente la capacité, ou respectivement l'admission de volume du frein sur roue.

7. Système de freinage selon la revendication 6, **caractérisé en ce que** le modèle de pression prend en compte, de manière laminaire et turbulente, une pondération du rapport d'écoulement à l'intérieur du chemin hydraulique, à partir du système piston/cylindre (14, HZ) au delà de la soupape de commande (17a, 17b, 17c, 17d) jusqu'au cylindre de roue du frein sur roue.

8. Système de freinage selon une des revendications de 4 à 5, **caractérisé en ce que** le modèle de pression détermine l'instant de fermeture de chaque soupape de commande (17a, 17b, 17c, 17d) en fonction de la pression réelle calculée, de la pression actuelle dans la chambre de travail du système piston/cylindre, ainsi que, lors de l'essai final, par la mesure des temps de commutation définis de la soupape de commande, conçue en tant qu'électrovanne, et calcule le gradient de pression correspondant.

9. Système de freinage selon une des revendications de 4 à 8, **caractérisé en ce que** les paramètres du modèle de pression sont une fonction de la température, en particulier de la température ambiante des soupapes de commande (17a, 17b, 17c, 17d) et/ou ils sont adaptés ou corrigés à l'aide de la température.

10. Système de freinage selon une des revendications de 4 à 9, **caractérisé en ce que** le dispositif de régulation vérifie le modèle de pression et/ou règle ses valeurs et paramètres **en ce que** le dispositif de régulation détermine la pression réelle dans le système piston/cylindre (14, HZ) lors d'une soupape de commande ouverte (17a, 17b, 17c, 17d) après avoir attendu un bref temps d'attaque.

11. Système de freinage selon une des revendications de 4 à 10, **caractérisé en ce que** l'hystérésis contenue dans le système hydraulique dans le modèle de pression est calculée, respectivement prise en compte.

12. Système de freinage selon une des revendications de 4 à 11, **caractérisé en ce que** le dispositif de régulation calcule par l'intermédiaire du modèle de pression (103) la pression correspondante ($p_R(t)$) dans les freins sur roues et transmet le valeurs de pression ($p_R(t)$) calculées à au moins un régulateur ABS/ESP (104) et à un dispositif de régulation de pression (106), auquel cas le dispositif de régulation de pression (106) commande au moins les soupapes de commande à 2/2 voies (17a, 17b, 17c, 17d) ainsi que le moteur électrique, et qu'un dispositif de priorisation (105) entreprend une sélection de la roue au moins à l'aide des données transférées par le régulateur ABS/ESP (104) et les communique au dispositif de régulation de pression (106).

13. Système de freinage selon la revendication 12, **caractérisé en ce que** le dispositif de priorisation (105) entreprend la priorisation de la sélection de la roue à l'aide du critère « course de freinage optimale » et/ou « stabilité de la régulation ».

14. Système de freinage selon une des revendications de 4 à 13, **caractérisé en ce que** le dispositif de régulation adapte les paramètres du modèle de pression à l'aide de la température déterminées dans le système de freinage ou à des endroits spécifiques dans le système de freinage, en particulier dans les freins sur roues, les conduites hydrauliques, les soupapes de commande à 2/2 voies et/ou des températures déterminées dans le système piston/cylindre.

15. Système de freinage selon une des revendications 12, 13 ou 14, lorsque dépendantes de la revendication 12, **caractérisé en ce que** le dispositif de priorisation (105) ne permet pas, lors d'une réduction de pression ayant justement lieu dans un ou plusieurs freins sur roues, une réduction de pression simultanée dans un ou plusieurs freins sur roues, et inversement.

16. Système de freinage selon la revendication 12 ou selon une des revendications 12 et 13 jusqu'à 15, **caractérisé en ce que** le dispositif de priorisation (105), lors d'un glissement des roues au freinage supérieur à la valeur du seuil de dérapage et/ou lors d'une accélération et décélération de roue supérieure à 5g ou respectivement -5g, commute sur une montée ou respectivement une réduction de pression simultanée ou partiellement simultanée.

17. Système de freinage selon une des revendications précédentes, **caractérisé en ce que** le piston du système piston/cylindre (14, HZ, THZ) et les conduites du système piston/cylindre (14, HZ, THZ) sont conçus pour être rigides vers la soupape de commande (17a, 17b, 17c, 17d).

18. Procédé de réglage d'une pression de freinage dans au moins un frein sur roue en utilisant un système de freinage selon une des revendications précédentes, **caractérisé en ce que** la pression dans au moins deux freins sur roues (18a, 18b, 18c, 18d) est augmentée ou réduite consécutivement, en même temps, c'est-à-dire simultanément, ou en concomitance, c'est-à-dire partiellement simultanément.

19. Procédé de réglage d'une pression de freinage dans au moins un frein sur roue en utilisant un système de freinage selon une des revendications de 1 à 17, ou conformément à un procédé selon la revendication 18, **caractérisé en ce que** lors d'une montée ou réduction de pression simultanée dans au moins deux freins sur roues (18a, 18b, 18c, 18d), la différence de pression entre la chambre de travail du système piston/cylindre (14, THZ) et les freins sur roues correspondants (18a, 18b, 18c, 18d) est choisie de telle dimension qu'aucun équilibrage de pression n'a lieu entre les freins sur roues correspondants (18a, 18b, 18c, 18d).

20. Procédé selon la revendication 19, **caractérisé en ce que** le piston du système piston/cylindre (14, THZ) est rajusté par le dispositif de régulation pour le maintien de la différence de pression, lors de soupapes de commande ouvertes (17a, 17b, 17c, 17d).

21. Procédé de réglage d'une pression de freinage dans au moins un frein sur roue en utilisation un système de freinage selon une des revendications de 1 à 17 ou conformément à un procédé selon une des revendications de 18 à 20, **caractérisé en ce que** la pression dans la chambre de travail du système piston/cylindre (14, HZ) est ajustée ou réglée, avant le début de la réduction de pression, sur le niveau de pression se trouvant dans les freins sur roues correspondants (18a, 18b, 18c, 18d) ou sur une niveau de pression inférieur, et par la suite la soupape de commande associée (17a, 17b, 17c, 17d) est ouverte par le dispositif de régulation, et que la pression dans la chambre de travail du système piston/cylindre (14, THZ) est ajustée ou réglée, avant le début de la montée de pression, sur le niveau de pression se trouvant dans les freins sur roues correspondants (18a, 18b, 18c, 18d) ou sur un niveau de pression supérieur, et par la suite la soupape de commande associée (17a, 17b, 17c, 17d) est ouverte par le dispositif de régulation.

Fig. 1

Fig. 2

Fig. 3

EP 2 396 202 B1

Fig. 4

Fig. 5

EP 2 396 202 B1

**IN DER BESCHREIBUNG AUFGEFÜHRTE DOKUMENTE**

**In der Beschreibung aufgeführte Patentdokumente**

- WO 2006111393 A1

**In der Beschreibung aufgeführte Nicht-Patentliteratur**

- Bei ABS / ESP bestimmt die Genauigkeit und die Dynamik des Druckverlaufes die Regelgüte und damit den Bremsweg und die Stabilität des Fahrzeugs. Hierzu liefert das Bremsenhandbuch. 2004, 114-119